# FASCICULE DE BREVET EUROPEEN

(11) **EP 1 346 237 B1**
(45) Date de publication et mention de la délivrance du brevet: **31.05.2006**
(21) Numéro de dépôt: 01271547.0
(22) Date de dépôt: 11.12.2001
(51) Int. Cl.: G01S 7/481, G01S 17/58, G01P 5/00

(54) **ANEMOMETRE A LASER**
LASER-ANEMOMETER
LASER ANEMOMETER

(30) Priorité: 21.12.2000 FR 0016778
(43) Date de publication de la demande: 24.09.2003
(73) Titulaire: Thales, 75008 Paris (FR)
(72) Inventeur: BRUEL, Christine, Thales Intellectual Property, F-94117 Arcueil ced ex (FR); COMBE, Hubert, Thales Intellectual Property, F-94117 Arcueil cedex (FR)
(74) Mandataire: Guérin, Michel
(86) Numéro de dépôt international: PCT/FR2001/003930
(87) Numéro de publication internationale: WO 2002/050565

(56) Documents cités:
- FR-A- 2 659 452
- FR-A- 2 761 162
- LEMAITRE-AUGER P: "L'INTEGRATION D'UN VELOCIMETRE LASER DOPPLER: UN NOUVEAU CAPTEUR OPTIQUE" REE: REVUE GENERALE DE L'ELECTRICITE ET DE L'ELECTRONIQUE, REVUE GENERALE DE L'ELECTRICITE S.A, FR, no. 4, avril 1999 (1999-04), pages 54-56, XP000896715 ISSN: 1265-6534

## Description

L'invention concerne les anémomètres à laser, c'est-à-dire les instruments de mesure de vitesse de l'air ou de vitesse par rapport à l'air qui utilisent le principe suivant : illumination à distance, par un faisceau de lumière laser en général infrarouge, d'une région de l'espace contenant des particules ou poussières en suspension (naturellement présentes ou volontairement injectées dans cette région et appelées également aérosols), réflexion de la lumière sur les particules, détection optique du faisceau réfléchi vers la source, et traitement électronique pour déterminer par calcul une vitesse relative entre l'ensemble source-détecteur d'une part, et les particules d'autre part.

Des anémomètres à laser sont utilisés notamment dans les aéronefs pour mesurer la vitesse de l'avion par rapport à l'air ambiant qui contient des particules naturelles en suspension. Un des avantages des anémomètres à laser par rapport aux sondes anémométriques à mesure de pression est qu'ils permettent une mesure de la vitesse par rapport à l'air ambiant non pas directement sur la surface de l'avion mais à une certaine distance de cette surface, là où l'air est moins perturbé par l'avion lui-même ou même pas perturbé du tout.

On distingue deux grands types d'anémomètres à laser : les anémomètres à mesure transverse et les anémomètres à mesure longitudinale.

Les anémomètres à mesure transverse émettent deux faisceaux de lumière cohérente, légèrement inclinés l'un par rapport à l'autre, qui interfèrent dans une zone de mesure (par exemple à une distance d'un mètre environ de l'optique d'émission). Des franges d'interférence planes parallèles sont produites dans cette zone, et une particule qui traverse ces franges subit une illumination d'intensité globalement sinusoïdale ; elle réfléchit donc une quantité de lumière variant sinusoïdalement. La fréquence de cette variation dépend de la composante de vitesse de la particule dans la direction perpendiculaire au plan des franges d'interférence. Cette direction est située dans le plan défini par les deux faisceaux inclinés et perpendiculaire à la bissectrice de ces deux faisceaux. Ces anémomètres mesurent donc une composante de vitesse transversale par rapport à l'axe général des faisceaux.

Les anémomètres à mesure longitudinale fonctionnent sur un principe différent. Ils émettent un seul faisceau laser et mesurent la composante de vitesse relative des particules dans la direction de l'axe optique de ce faisceau. Le faisceau est focalisé par une optique d'émission à une grande distance (par exemple 50 mètres), dans un volume de mesure où les particules illuminées vont renvoyer une faible fraction d'énergie vers la source en cohérence avec le faisceau d'émission mais avec un décalage de type doppler sur la fréquence optique, dû à la composante de vitesse des particules dans l'axe de retour du faisceau réfléchi. La détection consiste à faire interférer la lumière cohérente rétrodiffusée avec une fraction du faisceau émis, et à produire des battements d'intensité à une fréquence détectable électroniquement. On traite alors le signal électronique pour en extraire un spectre de fréquences et déduire de ce spectre une composante statistiquement majoritaire qui représente la vitesse moyenne des particules par rapport à l'anémomètre dans la direction de l'axe optique. Ces anémomètres à mesure longitudinale permettent de mesurer la vitesse d'un aéronef par rapport à une zone d'air ambiant éloignée de l'aéronef, donc peu perturbée par celui-ci, alors que les anémomètres à mesure transverse observent l'air à une distance qui n'excède pas environ un mètre, donc en pratique en atmosphère turbulente.

Lorsqu'on souhaite mesurer un vecteur vitesse complet, on utilise trois mesures anémomètriques successives ou simultanées dont les axes optiques sont orientés selon trois directions connues (par exemple trois directions orthogonales) et on détermine le vecteur vitesse d'après ses trois composantes. Davantage de mesures (par exemple quatre) peuvent être utilisées pour obtenir des redondances sécurisant la mesure du vecteur vitesse. C'est typiquement le cas dans un aéronef où la vitesse par rapport à l'air est utile aussi bien dans le plan horizontal que selon un axe vertical.

Un inconvénient des anémomètres laser par rapport aux simples sondes de mesure de pression est qu'ils sont encombrants et difficiles pour cette raison à installer dans un aéronef. Par exemple, il n'est pas facile de trouver un endroit de l'aéronef où d'une part on a la place d'installer l'anémomètre et d'autre part les trois objectifs pointent bien vers trois directions intéressantes, de préférence orthogonales.

Un des buts de l'invention est par conséquent de concevoir un anémomètre qui puisse être installé le plus facilement possible compte tenu des contraintes imposées par l'environnement.

Dans ce but, on a déjà proposé, dans le brevet FR-A-2 659 452 de placer la source laser, et son optique de focalisation, à distance des moyens de détection interférométrique et de traitement électronique, et même à distance de la source de pompage optique du laser lorsque le laser est pompé optiquement. Mais, dans le cas général où on fait une mesure de vecteur vitesse selon trois axes, cela obligeait à utiliser des commutateurs optiques difficiles à réaliser.

On a également proposé, dans le brevet FR-A-2 761 162 d'utiliser des fibres optiques et coupleurs optiques dans différentes parties du système, mais l'architecture qui en résulte ne peut fonctionner que pour des très faibles puissances lumineuses, de l'ordre de 1 watt environ. Pour certaines applications, telles que l'observation de vitesses à grande distance et en haute altitude, ces puissances sont beaucoup trop faibles et des puissances au moins dix fois supérieures sont souhaitées.

L'invention propose par conséquent une nouvelle architecture générale d'anémomètre à laser, permettant une plus grande souplesse d'installation, une facilité de réalisation, et cependant une puissance suffisante d'émission, en tenant compte par ailleurs d'autres contraintes techniques inhérentes aux systèmes optiques et électroniques (minimiser le bruit optique et le bruit électronique par exemple) et en tenant compte bien sûr de contraintes de coûts, notamment pour la fabrication en série.

A cet effet, on propose un anémomètre à laser comportant au moins une source laser, un système optique d'émission et de réception permettant d'une part d'émettre un faisceau laser issu de la source vers des particules en suspension dans un milieu en mouvement par rapport à l'anémomètre et d'autre part de recevoir et transmettre un rayonnement rétrodiffusé par les particules, un mélangeur optique pour mélanger un faisceau laser de référence, représentant le faisceau émis par le système optique, avec le rayonnement reçu et transmis par le système optique, au moins un détecteur photosensible pour détecter l'énergie du rayonnement en sortie du mélangeur, et un système de traitement électronique pour calculer la vitesse relative du milieu en mouvement par rapport à l'anémomètre en fonction des composantes de fréquence présentes dans les signaux de sortie du détecteur, cet anémomètre étant caractérisé en ce que le système optique d'émission et de réception ainsi que le mélangeur sont portés par un même support, la source laser est déportée par rapport à ce support et reliée au système optique par au moins une fibre optique, et le détecteur est déporté par rapport au support et relié à la sortie du mélangeur par une fibre optique, la voie principale d'émission du système d'émission et de réception porté par le support étant réalisée à l'aide d'une optique non guidée.

Dans ce qui suit, le support du système optique et du mélangeur sera désigné par commodité par l'expression « platine » de support, sans que cela implique pour autant une forme particulière de ce support, la forme en plaque ou autre dépendant des circonstances de réalisation et d'utilisation envisagées.

Ainsi, seule l'optique d'émission-réception et le mélangeur optique se situent sur une platine de support qui devra être placée à un endroit imposé par les contraintes de l'application : par exemple pour un avion les contraintes dues à la structure de l'avion font qu'on a peu de choix d'emplacements (et de place disponible dans ces emplacements) pour pouvoir émettre les faisceaux lasers dans les directions désirées. Avec les techniques actuelles, on peut alors limiter l'encombrement de cette platine à environ 15x8x5cm³. Cette platine peut être mise à proximité immédiate de la surface extérieure (ou « peau ») de l'avion, le reste de l'anémomètre étant déporté aux endroits où on dispose de plus de place. Avec les architectures anciennes on avait besoin de beaucoup plus de place à proximité de la surface extérieure de l'avion, là où justement cette place fait souvent défaut.

Par ailleurs, la platine porte la voie principale d'émission du faisceau émis par la source laser et reçu à travers une fibre optique, mais cette voie principale d'émission ne comporte pas d'éléments d'optique guidée tels que des circulateurs ou coupleurs optiques qui seraient incompatibles avec les puissances de l'ordre de 20 watts qu'on souhaite émettre. Elle est constituée en pratique essentiellement de lentilles, lames transparentes, et prismes ou lames séparatrices ou miroirs semi-transparents de renvoi laissant passer le faisceau émis et redirigeant le faisceau réfléchi.

Un autre avantage est l'absence totale de composants ou liaisons électriques sur cette platine, ce qui la rend insensible aux perturbations électromagnétiques.

Pour un anémomètre à mesure selon plusieurs axes, on utilisera plusieurs platines portant chacune une optique d'émission et réception et un mélangeur optique. Les sources laser sont déportées et reliées à chacune des platines par au moins une fibre optique respective, et les détecteurs (qui ne sont pas nécessairement au même endroit que les sources) sont reliés chacun à l'une des platines par au moins une fibre optique respective. Les platines peuvent être séparées géographiquement les unes des autres, par exemple dans un avion une première platine à bâbord, une autre à tribord et la troisième en haut de la carlingue. Mais elles peuvent être également portées par une même structure, placée par exemple à l'avant de l'avion, cette structure comportant alors de préférence des moyens de réglage d'orientation permettant d'ajuster à une valeur désirée les orientations de chaque optique d'émission-réception par rapport à la structure (donc par rapport à l'avion).

Avec l'architecture selon l'invention, on peut par ailleurs maintenant utiliser des composants optiques et électroniques qui sont de moins en moins coûteux du fait de leur utilisation à grande échelle dans le domaine des télécommunications, tels que les fibres optiques, leurs systèmes de positionnement et leurs connecteurs, les coupleurs à fibres optiques pouvant servir de mélangeur optique, etc. (sauf pour la voie d'émission principale).

On utilisera de préférence comme sources laser des sources fonctionnant aux longueurs d'onde utilisées dans les télécommunications, notamment des lasers à semiconducteurs et des lasers à état solide (ou fibre optique) dopés à l'erbium, émettant à des longueurs d'onde situées vers 1,5 micromètre, non dangereuses pour l'oeil.

De préférence, la source laser est connectée à l'optique d'émission par une première fibre optique monomode à maintien de polarisation, cette première fibre optique transportant l'essentiel de l'énergie de la source laser, et par une deuxième fibre optique, de préférence également monomode et à maintien de polarisation, à une entrée du mélangeur optique situé sur la platine. Cette deuxième fibre transporte une petite fraction de la puissance laser vers le mélangeur.

Le mélangeur peut par ailleurs comporter deux voies de sortie et être relié à deux détecteurs séparés (déportés) par deux fibres optiques, ceci notamment lorsqu'on souhaite utiliser un principe de détection équilibrée permettant de réduire les bruits dus notamment aux fluctuations de la source laser.

D'autres caractéristiques et avantages de l'invention apparaîtront à la lecture de la description détaillée qui suit et qui est faite en référence aux dessins annexés dans lesquels :
- la figure 1 représente le système d'anémométrie laser selon l'invention ;
- la figure 2 représente une variante de réalisation.

Le système d'anémométrie laser comporte une platine de support 10 portant l'optique d'émission et de réception d'un faisceau laser, mais ne portant pas la source laser qui est à l'origine de ce faisceau. La source laser 12 est déportée pour être située à un endroit différent, et est reliée à la platine par une fibre optique 14. Cette fibre est de préférence de type monomode et à maintien de polarisation pour conserver la polarisation du faisceau, la polarisation étant utile notamment pour assurer la séparation du faisceau d'émission et du faisceau de retour à l'intérieur de l'optique d'émission et de réception (séparation effectuée comme on le verra par une lame biréfringente).

L'extrémité de fibre reliée à la platine est portée par une tête de maintien 16 avec de préférence des moyens de réglage de position (non représentés) de cette tête sur la platine.

L'optique d'émission et de réception comprend les éléments classiquement nécessaires à la production d'un faisceau laser focalisé à une distance d'une cinquantaine de mètres environ. Cette optique a été représentée sous forme d'un objectif afocal 20 (schématiquement une lentille divergente suivie d'une lentille convergente). L'optique d'émission peut comprendre aussi une lentille supplémentaire 22 placée entre l'objectif 20 et la tête 16 de la fibre optique 14 amenant le faisceau laser. Une lame quart d'onde 24 et une lame de séparation de polarisation 26, transparente pour une polarisation et réfléchissante pour l'autre, sont situées entre l'objectif 20 et la lentille 22. Tous ces éléments sont portés par la platine 10. Ce sont des éléments d'optique en propagation libre et non des éléments d'optique guidée.

Le faisceau laser amené de la source laser 12 par la fibre optique 14 passe successivement
- dans la lentille 22 où il est collimaté, le réglage de position de la tête de maintien 16 plaçant l'extrémité de la fibre 14 au foyer de la lentille ;
- à travers la lame de séparation 26, transparente pour la polarisation linéaire de faisceau arrivant par la fibre 14 ;
- à travers la lame quart d'onde 24 qui convertit la polarisation linéaire du faisceau en polarisation circulaire ;
- à travers l'objectif afocal 20 qui le transmet vers l'atmosphère en le focalisant dans un volume de mesure à grande distance de l'optique d'émission.

Une puissance de 20 watts environ peut passer à travers ces éléments sans difficulté.

La lumière cohérente rétrodiffusée par les particules situées dans le volume de mesure possède une polarisation circulaire inverse de celle du faisceau émis ; elle revient par l'objectif 20, par la lame quart d'onde 24 où sa polarisation circulaire est convertie en polarisation linéaire inverse de celle de départ; du fait de cette polarisation inverse, la lumière de retour est entièrement réfléchie par la lame de séparation 26 vers une extrémité de fibre optique 32 constituant une première entrée d'un coupleur à fibre optique 30. L'extrémité de la fibre 32 est portée par une tête de maintien 34 pourvue de moyens de réglage de sa position sur la platine. Une lentille convergente 36 peut être prévue entre la lame 26 et la tête de maintien 34 pour focaliser le faisceau de retour sur l'extrémité de la fibre 32 ainsi maintenue.

Les éléments 20, 24 et 26 sont communs aux chemins d'émission et de réception de l'optique d'émission et de réception ; les éléments 16 et 22 sont spécifiques du chemin d'émission ; et les éléments 34 et 36 sont spécifiques du chemin de réception. Tous sont portés par la platine 10.

Le coupleur à fibres optiques 30 est également porté par la platine 10. Ce coupleur sert de mélangeur optique destiné à mélanger une fraction du faisceau laser de départ avec la lumière cohérente de retour amenée par la fibre optique 32. A cet effet, le coupleur comporte une deuxième fibre optique d'entrée 38, reliée à un connecteur de fibres optiques 40 situé sur la platine 10. Le connecteur 40 est relié à une fibre optique 42, de préférence monomode et à maintien de polarisation, qui amène de la source laser 12 déportée une petite fraction de la lumière cohérente du laser. Un tel coupleur à fibre optique, travaillant donc en optique guidée, peut être utilisé ici car la puissance lumineuse circulant dans la voie de réception est beaucoup plus faible que celle qui circule dans la voie principale d'émission.

En pratique, la source laser 12 peut être constituée d'un petit laser de faible puissance suivi d'un ou plusieurs étages amplificateurs à fibres optiques dopées (le plus souvent à l'erbium) ; le petit laser de faible puissance est une diode laser du type diode DFB (« distributed feedback diode », c'est-à-dire une diode laser à réseau de Bragg), ou un laser à barreau de type laser microchip, c'est-à-dire un très petit laser à barreau solide. Dans ce type de construction, la sortie des amplificateurs à fibre optique dopée est transmise sur la fibre principale 14, et une faible fraction d'énergie laser est prélevée à la sortie du laser de faible puissance, avant amplification ou dans un étage intermédiaire, pour être envoyée sur la fibre 42.

Le coupleur à fibres optiques, qui est constitué par les deux fibres optiques 32 et 38 fusionnées sur une longueur de quelques centimètres, noyées dans une résine, réalise le mélange de deux ondes électromagnétiques cohérentes, dont l'une (sur la fibre 38) est à la fréquence laser de la source et l'autre (sur la fibre 32) est à une fréquence décalée par effet Doppler en fonction de la vitesse des particules qui ont renvoyé la lumière vers la source. L'onde qui est à la fréquence laser de la source peut éventuellement être décalée par un translateur de fréquence tel qu'un modulateur acousto-optique ; cela permet alors de connaître également le signe de la vitesse.

Un battement se produit dans le coupleur optique et l'énergie propagée dans la ou les fibres optiques de sortie du coupleur 30 présente des maxima et des minima à la fréquence de ce battement.

Cette énergie est amenée vers un détecteur sensible à la lumière qui produira des signaux électriques contenant la fréquence de battement.

Dans l'exemple de la figure, on a prévu deux détecteurs différents connectés à deux sorties symétriques du coupleur 30. Les sorties du coupleur, constituées par les prolongements 44 et 46 des fibres d'entrée 32 et 38, sont connectées à deux connecteurs à fibres optiques 48 et 50 respectivement. Le connecteur 48 couple la fibre 44 à une fibre optique 54, et le connecteur 50 couple la fibre optique 46 à une autre fibre optique 56. Les fibres optiques 54 et 56 transmettent le faisceau laser de réception, avec ses battements d'énergie, à des détecteurs respectifs 64 et 66. Les fibres 54 et 56 n'ont pas besoin d'être monomodes et à maintien de polarisation. Ce sont de simples fibres multimodes.

Les détecteurs 64 et 66 fournissent des signaux électriques à une fréquence correspondant aux battements du faisceau laser d'émission et du faisceau laser de réception. Un seul détecteur pourrait suffire à l'exploitation de l'information optique, mais avec deux détecteurs on peut effectuer une détection équilibrée permettant d'éliminer certains bruits.

Les signaux issus des détecteurs sont appliqués à des circuits de traitement de signal analogique (70) et numériques rapides (72), les circuits de traitement numérique rapide fournissant des informations numériques utiles pour la détermination de vitesse.

La détermination de vitesse est ensuite faite dans un calculateur 74 à partir de ces informations numériques.

Les particules illuminées par le faisceau laser ont des vitesses aléatoires dans la direction d'illumination, mais, statistiquement, elles présentent une vitesse moyenne correspondant à la vitesse relative entre l'anémomètre et l'air. Le calculateur traite les signaux reçus pour extraire des données significatives des spectres de fréquences des signaux détectés par les détecteurs.

Les détecteurs et les circuits de traitement de signal analogique et numérique rapide 70 et 72 sont portés par une ou plusieurs cartes de circuit imprimé 75, déportées par rapport à la platine 10 et reliées à la platine par les fibres 54 et 56.

Dans le cas général, on cherche à déterminer la vitesse selon trois axes différents, de préférence orthogonaux, pour obtenir un vecteur vitesse complet. Dans ce cas, le système de mesure complet comporte trois platines 10 (de préférence rigoureusement identiques), trois cartes de circuit imprimé 75, de préférence identiques, portant les détecteurs et circuits électroniques correspondant à chaque platine, trois sources laser 12 identiques, et un seul calculateur 74 traitant les signaux des trois cartes. Cette modularité facilite l'utilisation dans des applications différentes.

Dans une application de mesure de vitesse d'aéronef, seules les platines 10 sont placées à proximité de la peau de l'avion, tous les autres éléments pouvant être placés à des endroits où il y a plus de place.

Les platines peuvent être alors placées à trois endroits différents de l'avion, ou encore en un même endroit face auquel trois axes de visibilité lointaine sont disponibles. Dans ce cas, les trois platines peuvent être montées sur un support commun pourvu de moyens de réglage de précision permettant d'orienter les optiques d'émission précisément dans les directions souhaitées.

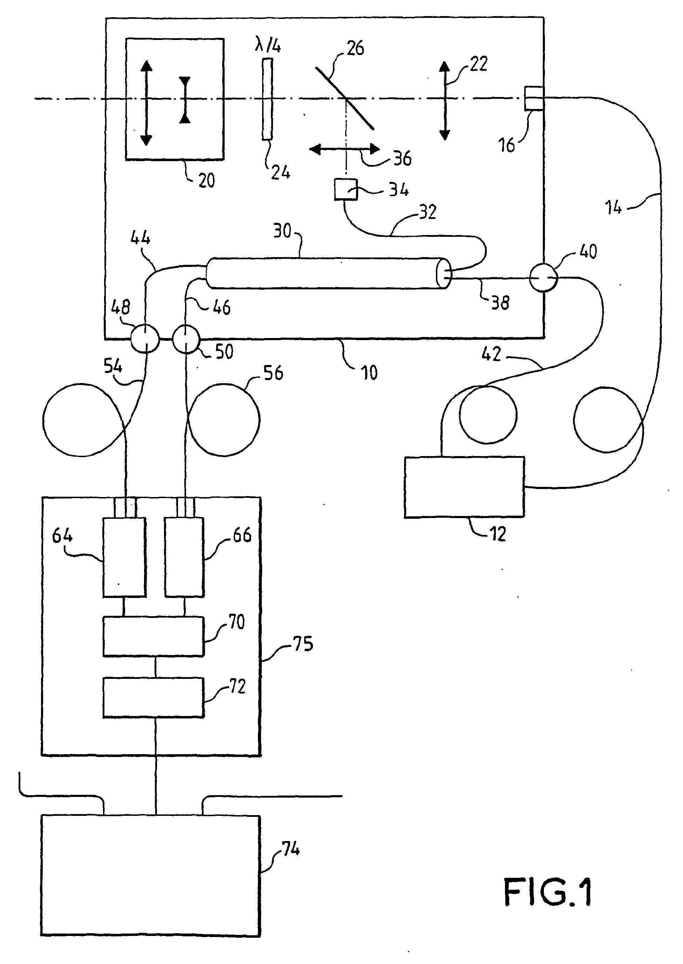

Sur la réalisation décrite à la figure 1, on utilise comme mélangeur optique un coupleur à fibre optique qui reçoit par la fibre optique 42 une fraction du faisceau de la source laser 12.

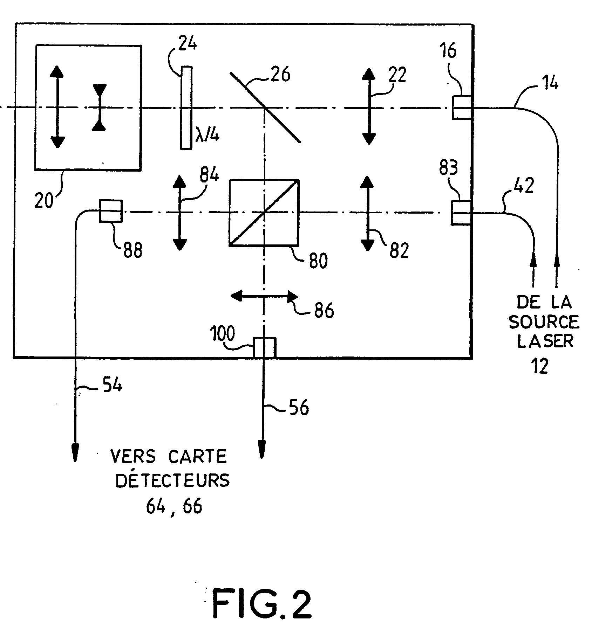

La figure 2 représente une variante de réalisation dans laquelle le mélangeur optique n'est pas constitué par un coupleur à fibres optiques mais par un cube mélangeur 80. Dans ce cas, la lame séparatrice 26 renvoie le faisceau de retour vers une première face d'entrée du cube. Le faisceau de référence issu de la fibre optique 42 (en provenance de la source laser déportée 12) est amené, par une lentille 82 (analogue à la lentille convergente 22 de la figure 1) sur une autre face d'entrée du cube. Le cube comporte une surface diagonale semi-réfléchissante (pouvoir de réflexion égal au pouvoir de transmission dans le cas où on utilise deux détecteurs et où on sort donc symétriquement sur deux faces de sortie du cube). Une tête de maintien 83, de préférence réglable en position, permet de maintenir l'extrémité de la fibre 42 au foyer de la lentille 82, de la même manière que la tête 16 maintient la fibre 14 au foyer de la lentille 22. Les éléments 16, 20, 22, 24, 26 sont les mêmes qu'à la figure 1 et jouent le même rôle .

Le faisceau sortant par une face de sortie du cube est un mélange du faisceau de retour en provenance de l'optique de réception, et du faisceau de référence issu de la fibre 42.

Une optique de focalisation (lentille convergente 84 pour l'une des faces de sortie, 86 pour l'autre) focalise le faisceau mélangé sur l'extrémité d'une fibre optique 54 (ou 56) allant vers le détecteur 64 (ou 66). Les extrémités des fibres 54 et 56 sont maintenues dans des têtes de maintien 88 et 100 ; ces têtes sont réglables en position pour que l'extrémité de la fibre soit au foyer des lentilles convergentes 84 et 86. Les fibres 54 et 56 sont des fibres multimodes.

Dans cette réalisation, on n'a pas besoin des connecteurs à fibres optiques 40, 48 et 50 qu'on avait à la figure 1. Ces connecteurs sont remplacés par de simples têtes de maintien et positionnement des extrémités de fibres. Mais on a besoin du cube mélangeur 80 et des optiques de focalisation 84 et 86.

Un translateur de fréquence tel qu'un modulateur acousto-optique peut être ajouté sur la voie 42, de préférence dans ou à proximité de la source laser 12, dans les applications où le signe de la vitesse doit être connu (hélicoptère).

## Revendications

1. Anémomètre longitudinal à laser pour la mesure de vitesse d'un aéronef à partir de l'aéronef, comportant au moins une source laser (12), un système optique d'émission et de réception (20, 24, 26, 36) permettant d'une part d'émettre un faisceau laser issu de la source vers des particules en suspension dans l'air et d'autre part de recevoir et transmettre un rayonnement rétrodiffusé par les particutes, la voie principale d'émission (22, 26, 24, 20) du système d'émission et de réception porté par le support étant réalisée à l'aide d'une optique non guidée, un mélangeur optique (30) pour mélanger un faisceau laser de référence, représentant le faisceau émis par le système optique, avec le rayonnement reçu et transmis par le système optique, au moins un détecteur photosensible (64, 66) pour détecter l'énergie du rayonnement en sortie du mélangeur, et un système de traitement électronique (70, 72, 74) pour calculer la vitesse relative de l'aéronef par rapport à l'air en fonction des composantes de fréquence présentes dans les signaux de sortie du détecteur, cet anémomètre étant **caractérisé en ce que** le système optique d'émission et de réception ainsi que le mélangeur sont portés par un même support (10), la source laser (12) est déportée par rapport à ce support et reliée au système optique par au moins une fibre optique (14), et le détecteur (64, 66) est déporté par rapport au support et relié à la sortie du mélangeur par une fibre optique (54, 56).

2. Anémomètre selon la revendication 1, **caractérisé en ce qu'**il comporte, pour la mesure de vitesse selon plusieurs axes, plusieurs supports portant chacun un système optique d'émission et réception et un mélangeur optique, l'anémomètre comportant plusieurs sources laser déportées et reliées chacune à un système optique respectif par au moins une fibre optique, et plusieurs détecteurs reliés chacun à un mélangeur respectif par au moins une fibre optique.

3. Anémomètre selon la revendication 2, **caractérisé en ce que** les supports sont portés par une même structure comportant des moyens de réglage d'orientation permettant d'ajuster à une valeur désirée les orientations des différents systèmes optiques d'émission-réception par rapport à la structure.

4. Anémomètre selon l'une des revendications 2 et 3, **caractérisé en ce que** les différentes sources laser sont identiques, et **en ce que** les différents supports avec leur système optique d'émission et réception et leur mélangeur optique sont identiques.

5. Anémomètre selon l'une des revendications 2 à 4, **caractérisé en ce que** les détecteurs sont reliés chacun à un circuit électronique de traitement de signal respectif (70, 72), et **en ce que** les différents circuits de traitement de signal sont reliés à un calculateur commun (74) pourvu de moyens de calcul permettant la détermination des différentes composantes d'un vecteur vitesse à partir de données numériques fournies par les circuits de traitement de signal.

6. Anémomètre selon l'une des revendications précédentes, **caractérisé en ce que** la source laser est connectée par une première fibre optique (14) monomode à maintien de polarisation à l'optique d'émission, cette première fibre optique transportant l'essentiel de l'énergie de la source laser, et par une deuxième fibre optique (42), de préférence également monomode et à maintien de polarisation, à une entrée du mélangeur optique.

7. Anémomètre selon l'une des revendications précédentes, **caractérisé en ce que** le mélangeur optique comporte deux voies de sortie et est relié par deux fibres optiques à deux détecteurs séparés (64, 66).

8. Anémomètre selon l'une des revendications précédentes, **caractérisé en ce que** le mélangeur est constitué par un coupleur à fibres optiques.

9. Anémomètre selon la revendication 8, **caractérisé en ce que** l'optique d'émission et réception comporte des moyens pour diriger le rayonnement reçu vers une entrée du coupleur, et **en ce qu'**un connecteur à fibres optiques (40) est prévu sur le support de l'optique d'émission et de réception, pour relier une fibre optique (42) provenant de la source laser déportée à une deuxième entrée du coupleur.

10. Anémomètre selon l'une des revendications 8 et 9, **caractérisé en ce qu'**un connecteur à fibres optiques (48, 50) est prévu sur le support de l'optique d'émission et réception, pour relier une sortie du coupleur à fibres optiques à une fibre optique (54, 56) reliée au détecteur déporté (64, 66).

11. Anémomètre selon l'une des revendications précédentes, **caractérisé en ce que** la source laser est une source émettant à une longueur d'onde de 1,5 micromètre environ.

## Claims

1. Longitudinal laser anemometer for measuring the velocity of an aircraft from the aircraft, having at least one laser source (12), an optical emission and reception system (20, 24, 26, 36) making it possible, on the one hand, to emit a laser beam coming from the source towards particles in suspension in the air and, on the other hand, to receive and transmit radiation back-scattered by the particles, the main emission channel (22, 26, 24, 20) of the emission and reception system carried by a support being produced with the aid of unguided optics, an optical mixer (30) for mixing a reference laser beam, representing the beam emitted by the optical system, with the radiation received and transmitted by the optical system, at least one photosensitive detector (64, 66) for detecting the energy of the radiation at the output of the mixer, and an electronic processing system (70, 72, 74) for calculating the relative velocity of the aircraft with respect to the air as a function of the frequency components present in the output signal of the detector, this anemometer being **characterized in that** the optical emission and reception system as well as the mixer are carried by the same support (10), the laser source (12) is located remotely from this support and is connected to the optical system by at least one optical fibre (14), and the detector (64, 66) is located remotely from the support and connected to the output of the mixer by an optical fibre (54, 56).

2. Anemometer according to Claim 1, **characterized in that** it has, for measuring velocity along a plurality of axis, a plurality of supports each carrying an optical emission and reception system and an optical mixer, the anemometer having a plurality of remotely located laser sources which are each connected to a respective optical system by at least one optical fibre, and a plurality of detectors which are each connected to a respective mixer by at least one optical fibre.

3. Anemometer according to Claim 2, **characterized in that** the supports are carried by the same structure, which has orientation adjustment means making it possible to adjust the orientations of the various optical emission-reception systems to a desired value with respect to the structure.

4. Anemometer according to either of Claims 2 and 3, **characterized in that** the various laser sources are identical, and **in that** the various supports, with their optical emission and reception system and their optical mixer, are identical.

5. Anemometer according to one of Claims 2 to 4, **characterized in that** the detectors are each connected to a respective electronic signal-processing circuit (70, 72), and **in that** the various signal-processing circuits are connected to a common computer (74) provided with computation means making it possible to determine the various components of a velocity vector on the basis of digital data provided by the signal-processing circuits.

6. Anemometer according to one of the preceding claims, **characterized in that** the laser source is connected by a first polarization-preserving single-mode optical fibre (14) to the emission optics, this first optical fibre carrying the majority of the energy from the laser source, and by a second optical fibre (42), preferably also single-mode and polarization-preserving, to an input of the optical mixer.

7. Anemometer according to one of the preceding claims, **characterized in that** the optical mixer has two output channels and is connected by two optical fibres to two separate detectors (64, 66).

8. Anemometer according to one of the preceding claims, **characterized in that** the mixer consists of a fibre-optic coupler.

9. Anemometer according to Claim 8, **characterized in that** the emission and reception optics include means for directing the received radiation towards an input of the coupler, and **in that** a fibre-optic connector (40) is provided on the support of the emission and reception optics, in order to connect an optical fibre (42) coming from the remotely located laser source to a second input of the coupler.

10. Anemometer according to either of Claims 8 and 9, **characterized in that** a fibre-optic connector (48, 50) is provided on the support of the emission and reception optics, in order to connect an output of the fibre-optic coupler to an optical fibre (54, 56) connected to the remotely located detector (64, 66) .

11. Anemometer according to one of the preceding claims, **characterized in that** the laser source is a source emitting at a wavelength of about 1.5 micrometres.

## Patentansprüche

1. Laseranemometer mit Längsmessung zur Messung der Geschwindigkeit eines Luftfahrzeugs ausgehend vom Luftfahrzeug, das mindestens eine Laserquelle (12), ein optisches Sende-/Empfangssystem (20, 24, 26, 36), das es ermöglicht, einerseits einen von der Quelle stammenden Laserstrahl zu in der Luft schwebenden Teilchen zu senden, und andererseits eine von den Teilchen rückgestreute Strahlung zu empfangen und zu übertragen, wobei der Hauptsendekanal (22, 26, 24, 20) des von einem Träger getragenen Sende-/Empfangssystems mit Hilfe einer nicht geleiteten Optik hergestellt wird, einen optischen Mischer (30), um einen Bezugslaserstrahl, der den vom optischen System gesendeten Strahl darstellt, mit der von dem optischen System empfangenen und übertragenen Strahlung zu mischen, mindestens einen lichtempfindlichen Detektor (64, 66), um die Energie der Strahlung am Ausgang des Mischers zu erfassen, und ein elektronisches Verarbeitungssystem (70, 72, 74) aufweist, um die relative Geschwindigkeit des Luftfahrzeugs bezüglich der Luft in Abhängigkeit von den Frequenzkomponenten zu berechnen, die in den Ausgangssignalen des Detektors vorhanden sind, wobei dieses Anemometer **dadurch gekennzeichnet ist, dass** das optische Sende-/Empfangssystem sowie der Mischer von dem gleichen Träger (10) getragen werden, die Laserquelle (12) bezüglich dieses Trägers versetzt und mit dem optischen System über mindestens einen Lichtwellenleiter (14) verbunden ist, und der Detektor (64, 66) bezüglich des Trägers versetzt und mit dem Ausgang des Mischers über einen Lichtwellenleiter (54, 56) verbunden ist.

2. Anemometer nach Anspruch 1, **dadurch gekennzeichnet, dass** es zur Geschwindigkeitsmessung gemäß mehrerer Achsen mehrere Träger aufweist, die je ein optisches Sende-/Empfangssystem und einen optischen Mischer tragen, wobei das Anemometer mehrere versetzte Laserquellen, die je über mindestens einen Lichtwellenleiter mit einem optischen System verbunden sind, und mehrere Detektoren aufweist, die je über mindestens einen Lichtwellenleiter mit einem Mischer verbunden sind.

3. Anemometer nach Anspruch 2, **dadurch gekennzeichnet, dass** die Träger von der gleichen Struktur getragen werden, die Mittel zur Ausrichtungsregelung aufweist, die es ermöglichen, die Ausrichtungen der verschiedenen optischen Sende-/Empfangssysteme bezüglich der Struktur auf einen gewünschten Wert einzustellen.

4. Anemometer nach einem der Ansprüche 2 und 3, **dadurch gekennzeichnet, dass** die verschiedenen Laserquellen gleich sind, und dass die verschiedenen Träger mit ihrem optischen Sende-/Empfangssystem und ihrem optischen Mischer gleich sind.

5. Anemometer nach einem der Ansprüche 2 bis 4,
**dadurch gekennzeichnet, dass** die Detektoren je mit einer elektronischen Signalverarbeitungsschaltung (70, 72) verbunden sind, und dass die verschiedenen Signalverarbeitungsschaltungen mit einem gemeinsamen Rechner (74) verbunden sind, der mit Rechenmitteln ausgestattet ist, die die Bestimmung der verschiedenen Komponenten eines Geschwindigkeitsvektors ausgehend von digitalen Daten ermöglichen, die von den Signalverarbeitungsschaltungen geliefert werden.

6. Anemometer nach einem der vorhergehenden Ansprüche, **dadurch gekennzeichnet, dass** die Laserquelle über einen ersten polarisationserhaltenden Monomode-Lichtwellenleiter (14) mit der Sendeoptik verbunden ist, wobei dieser erste Lichtwellenleiter den größten Teil der Energie der Laserquelle überträgt, und über einen zweiten, vorzugsweise ebenfalls polarisationserhaltenden Monomode-Lichtwellenleiter (42) mit einem Eingang des optischen Mischers verbunden ist.

7. Anemometer nach einem der vorhergehenden Ansprüche, **dadurch gekennzeichnet, dass** der optische Mischer zwei Ausgangskanäle aufweist und über zwei Lichtwellenleiter mit zwei getrennten Detektoren (64, 66) verbunden ist.

8. Anemometer nach einem der vorhergehenden Ansprüche, **dadurch gekennzeichnet, dass** der Mischer aus einem Lichtwellenleiterkoppler besteht.

9. Anemometer nach Anspruch 8, **dadurch gekennzeichnet, dass** die Sende-/Empfangsoptik Mittel aufweist, um die empfangene Strahlung zu einem Eingang des Kopplers zu leiten, und dass ein Lichtwellenleiterverbinder (40) auf dem Träger der Sende-/Empfangsoptik vorgesehen ist, um einen von der versetzten Laserquelle kommenden Lichtwellenleiter (42) mit einem zweiten Eingang des Kopplers zu verbinden.

10. Anemometer nach einem der Ansprüche 8 und 9, **dadurch gekennzeichnet, dass** ein Lichtwellenleiterverbinder (48, 50) auf dem Träger der Sende-/Empfangsoptik vorgesehen ist, um einen Ausgang des Lichtwellenleiterkopplers mit einem Lichtwellenleiter (54, 56) zu verbinden, der mit dem versetzten Detektor (64, 66) verbunden ist.

11. Anemometer nach einem der vorhergehenden Ansprüche, **dadurch gekennzeichnet, dass** die Laserquelle eine Quelle ist, die mit einer Wellenlänge von etwa 1,5 Mikrometer sendet.
